# EUROPÄISCHE PATENTANMELDUNG

(11) **EP 4 201 878 A1**
(43) Veröffentlichungstag der Anmeldung: **28.06.2023**
(21) Anmeldenummer: 21020650.4
(22) Anmeldetag: 21.12.2021
(51) Int. Cl.: C01B 3/56, C01B 3/50, C01B 3/48, C01B 3/34

(54) **VERFAHREN ZUR WASSERSTOFFERZEUGUNG MIT GERINGER KOHLENDIOXIDEMISSION**

(71) Anmelder: Linde GmbH, 82049 Pullach (DE)
(72) Erfinder: Leitmayr, Werner, 82049 Pullach (DE); Lang, Martin, 82049 Pullach (DE)
(74) Vertreter: Fischer, Werner

(57) **Zusammenfassung**

Die Erfindung betrifft ein Verfahren zur Erzeugung eines Wasserstoffprodukts, bei dem ein kohlenstoffhaltiger Einsatz (1) durch Reformierung (A, D) und Wassergas-Shift (S) zu einem weitgehend aus Wasserstoff und Kohlendioxid bestehenden Synthesegas (4) umgesetzt wird, aus dem eine Wasserstofffraktion (13) sowie eine Kohlendioxidfraktion (9) abgetrennt werden, wobei die Wasserstofffraktion (13) die für das Wasserstoffprodukt (13) geforderte Zusammensetzung besitzt und die Kohlendioxidfraktion (9) eine Reinheit aufweist, die ihre Abgabe als Produkt oder ihre Entsorgung durch Sequestrierung erlaubt. Kennzeichnend hierbei ist, dass das weitgehend aus Wasserstoff und Kohlendioxid bestehende Synthesegas mittels eines ersten Druckwechseladsorbers (PSA1) in eine an Kohlendioxid abgereicherte erste PSA-Hochdruckfraktion (6, 6') sowie eine mit Kohlendioxid angereicherte, erste PSA-Niederdruckfraktion (5, 5') zerlegt wird, aus der nach Verdichtung (P) die Kohlendioxidfraktion (9) durch kryogene Gaszerlegung (C) erhalten wird.

## Beschreibung

Die Erfindung betrifft ein Verfahren zur Erzeugung eines Wasserstoffprodukts, bei dem ein kohlenstoffhaltiger Einsatz durch Reformierung und Wassergas-Shift zu einem weitgehend aus Wasserstoff und Kohlendioxid bestehenden Synthesegas umgesetzt wird, aus dem eine Wasserstofffraktion sowie eine Kohlendioxidfraktion abgetrennt werden, wobei die Wasserstofffraktion die für das Wasserstoffprodukt geforderte Zusammensetzung besitzt und die Kohlendioxidfraktion eine Reinheit aufweist, die ihre Abgabe als Produkt oder ihre Entsorgung durch Sequestrierung erlaubt.

Unter einem Wasserstoffprodukt ist im vorliegenden Text ein Gas zu verstehen, das eine zur Abgabe als Produkt geforderte Zusammensetzung mit einem Wasserstoffgehalt von mehr als 98Vol.-% aufweist. Beispiele für Wasserstoffprodukte sind Reinwasserstoff mit einem Wasserstoffgehalt von mehr als 99,9Vol.-% und Brenngas, das wenigsten zu 98Vol.-% aus Wasserstoff besteht.

Nach dem Stand der Technik wird Wasserstoff großtechnisch überwiegend aus kohlenwasserstoffhaltigen Einsätzen wie insbesondere Erdgas gewonnen. Die Einsätze werden dabei durch Partielle Oxidation (POX), Dampf- (SMR) oder Autothermal-Reformierung (ATR) oder Kombinationen dieser Verfahren zu einem Syntheserohgas umgesetzt, das neben Wasserstoff auch Stickstoff, Kohlenmonoxid, Methan, Kohlendioxid und Wasser enthält. Zur Erhöhung der Wasserstoffausbeute wird das Syntheserohgas einer Wassergas-Shift unterzogen, um das enthaltene Kohlenmonoxid mit Wasser zu Wasserstoff und Kohlendioxid zu reagieren und ein weitgehend kohlenmonoxidfreies Synthesegas zu erhalten, aus dem das Wasserstoffprodukt abgetrennt wird.

Um den "Carbon Footprint" klein zu halten, werden die Minimierung von kohlenwasserstoffhalteigen Brenngasen sowie eine hohe Wärmeintegration angestrebt, durch die etwa der kohlenwasserstoffhaltige Einsatz und/oder das zum Betrieb eines Dampfreformers benötigte Brenngas im Wärmetausch mit abzukühlenden Verfahrensströmen auf hohe Temperaturen vorgewärmt werden. Daneben wird Kohlendioxid, das im Rauchgas eines Dampfreformers und/oder dem erzeugten Synthesegas vorliegen kann, entweder sequestriert oder einer stofflichen Nutzung zugeführt. In beiden Fällen ist es erforderlich, das Kohlendioxid mit einer vorgegebenen Reinheit zu gewinnen. Hierzu wird das kohlendioxidhaltige Gasgemisch üblicherweise einer Aminwäsche unterzogen, die in der Lage ist, mehr als 99% des enthaltenen Kohlendioxids aus einem Synthesegas bzw. 95-98% aus einem Rauchgas abzutrennen.

Je nachdem, ob bei einer auf Dampfreformierung basierenden Wasserstoffproduktion das Synthesegas oder das anfallende Rauchgas einer Aminwäsche unterzogen wird, kann eine "Carbon Capture Rate", die das Verhältnis der mit dem Kohlendioxid abgetrennten zu der in das Verfahren eingebrachten Kohlenstoffmenge angibt, zwischen 50 und 65% bzw. von mehr als 90% erreicht werden. Wird der Wasserstoff geringer Bildung von Rauchgas erzeugt, wie dies bei ATR- oder POX-basierten, einen Fired Heater umfassenden Anlagen der Fall ist, gelangt man durch die Aminwäsche des Synthesegases zu Carbon Capture Raten von über 90%.

Nachteilig hierbei sind allerdings die hohen, für eine Aminwäsche anfallenden Investitionskosten und der große Energiebedarf für die Regenerierung des beladenen Amin-Waschmittels, der gewöhnlich durch Dampf gedeckt wird. Bei einer Wäsche des Rauchgases verursachen zudem Waschmittelverluste einen beträchtlichen Anteil der Betriebskosten.

Aufgabe der Erfindung ist es daher, ein Verfahren der gattungsgemäßen Art anzugeben, das es ermöglicht, hohe Carbon Capture Raten von mehr als 90% mit geringeren Kosten zu erreichen, als es nach dem Stand der Technik möglich ist.

Die gestellte Aufgabe wird verfahrensseitig erfindungsgemäß dadurch gelöst, dass das weitgehend aus Wasserstoff und Kohlendioxid bestehende Synthesegas mittels eines ersten Druckwechseladsorbers (PSA) in eine an Kohlendioxid abgereicherte erste PSA-Hochdruckfraktion sowie eine mit Kohlendioxid angereicherte, Wasser enthaltende erste PSA-Niederdruckfraktion zerlegt wird, aus der die Kohlendioxidfraktion durch kryogene Gaszerlegung erhalten wird.

Die Wassergas-Shift wird vorzugsweise als Kombination aus Hoch- und Nieder- oder Mittel- und Niedertemperatur-Shift ausgeführt.

Sinnvollerweise ist zwischen der Wassergas-Shift und dem ersten Druckwechseladsorber eine Abkühleinrichtung angeordnet, in der das Synthesegas bis unter den Wassertaupunkt abgekühlt wird, um den größten Teil des enthaltenen Wassers abzutrennen und ein weitgehend wasserfreies Synthesegas zu erhalten.

Abhängig von den Anforderungen, die an die Reinheit und die Abgabebedingungen (Druck, Aggregatzustand) der Kohlendioxidfraktion gestellt werden, kann die kryogene Gaszerlegung auf unterschiedliche Weisen durchgeführt werden, denen das folgende Prinzip gemeinsam ist:
Die verdichtete und getrocknete erste PSA-Niederdruckfraktion wird abgekühlt und partiell kondensiert, wobei der größte Teil der enthaltenen Verunreinigungen - insbesondere Wasserstoff - in einem Hochdruckabscheider in eine als HD-Flashgas bezeichneten Fraktion abgeschieden werden. Die im Hochdruckabscheider erhaltene kohlendioxidreiche Flüssigfraktion kann je nach den für die Kohlendioxidfraktion geltenden Reinheitsanforderungen weiteren Reinigungsschritten unterzogen werden.

Soll die Kohlendioxidfraktion durch Sequestrierung entsorgt werden, reicht gewöhnlich ein zweiter Entspannungsschritt mit anschließender Gas/Flüssig-Trennung aus, um aus der ersten eine zweite kohlendioxidreiche Flüssigfraktion zu erhalten, die den Reinheitsanforderungen genügt. Die hierbei anfallende, als MD-Flashgas bezeichnete Gasfraktion wird vorzugsweise zurückgeführt und über eine Zwischeneinspeisung dem zur Verdichtung der erste PSA-Niederdruckfraktion eingesetzten Verdichter aufgegeben.

Die bei der zweiten Gas/Flüssig-Trennung oder ggf. einem anderen, etwa mit Hilfe einer Strippkolonne durchgeführten Trennschritt erhaltene, die geforderte Zusammensetzung der Kohlendioxidfraktion aufweisende Flüssigfraktion, kann verdampft und nach einer Verdichtung gasförmig abgegeben werden. Alternativ kann sie vor dem Verdampfen durch Pumpen auf Druck gebracht werden. Dies erfordert üblicherweise einen Kohlendioxid-Recycle, der z.B. als Zwischeneinspeisung dem zur Verdichtung der erste PSA-Niederdruckfraktion eingesetzten Verdichter aufgegeben wird. Möglich ist es auch, die Kohlendioxidfraktion flüssig abzugeben, wobei der Kältebedarf der kryogenen Gaszerlegung zweckmäßigerweise über einen externen Ammoniak- oder Propylen- oder Gemisch-Kältekreislauf gedeckt wird.

Druckwechseladsorber (PSA, Pressure Swing Adsorber) werden allgemein zur Trennung von gasförmigen Stoffgemischen verwendet. Sie nutzen die unterschiedlich starken Adsorptionskräfte der verschiedenen Moleküle oder Atome eines Gasgemisches gegenüber einem Adsorbens aus. Ein Druckwechseladsorber umfasst mehrere mit dem Adsorbens gefüllte Adsorberbehälter, die periodisch zwischen einem bei hohem Druck durchgeführten Adsorptionsbetrieb und einem Desorptionsbetrieb umgeschaltet werden, der bei wesentlich geringerem Druck abläuft.

Eine typische PSA zerlegt einen mit Adsorptionsdruck zugeführten Eintrittsstrom in eine PSA-Hochdruckfraktion, deren Druck annähernd dem Adsorptionsduck entspricht, sowie eine mit Desorptionsdruck anfallende PSA-Niederdruckfraktion.

Eine weit verbreitete PSA-Anwendung ist die Gewinnung der schwächer oder am schwächsten adsorbierbaren Komponente(n) des Eintrittsstroms in angereicherter oder reiner Form als PSA-Hochdruckfraktion. Im Falle des Synthesegases ist dies Wasserstoff, der wesentlich schwächer adsorbiert wird als Kohlendioxid. Es ist aber auch möglich, die stärker oder am stärksten adsorbierbare Komponente, also Kohlendioxid, in angereicherter oder reiner Form als PSA-Niederdruckfraktion zu gewinnen.

Eine bevorzugte Ausgestaltung des erfindungsgemäßen Verfahrens sieht vor, den ersten Druckwechseladsorber so auszulegen und zu betreiben, dass mindestens 95%, bevorzugt mehr als 99% des im Synthesegas enthaltenen Kohlendioxids in die erste PSA-Niederdruckfraktion übergehen und gleichzeitig mindestens 92%, bevorzugt mehr als 95% des im Synthesegas enthaltenen Wasserstoffs in die erste PSA-Hochdruckfraktion gelangen.

Neben Wasserstoff und Kohlendioxid kann das Synthesegas auch Methan, Kohlenmonoxid oder Stickstoff enthalten. Zur Verringerung der für die Verdichtung der PSA-Niederdruckfraktion erforderlichen Energie wird vorgeschlagen, den ersten Druckwechseladsorber außerdem so auszulegen und zu betreiben, dass wenigstens 50%, bevorzugt mehr als 65% des Methans, wenigstens 70% %, bevorzugt mehr als 80% des Kohlenmonoxids und wenigsten 80%, bevorzugt mehr als 85% des Stickstoffs aus dem Synthesegas in die erste PSA-Hochdruckfraktion übergehen.

Unter den angegebenen Bedingungen erfüllt die erste PSA-Hochdruckfraktion gewöhnlich nicht die an ein Wasserstoffprodukt gestellten Reinheitsanforderungen. Es wird daher vorgeschlagen, die erste PSA-Hochdruckfraktion einem zweiten Druckwechseladsorber zuzuführen, der so ausgelegt und betrieben wird, dass eine zweite PSA-Hochdruckfraktion mit einer Reinheit gewonnen wird, die ihre Abgabe als Wasserstoffprodukt erlaubt. Sinnvollerweise wird die erste PSA-Hochdruckfraktion stromaufwärts des zweiten Druckwechseladsorbers als Regeneriergas in einem Temperaturwechseladsorber verwendet, der dazu eingesetzt wird, um Wasserreste und ggf. Methanol aus der verdichteten ersten PSA-Niederdruckfraktion abzutrennen.

Bei der angegebenen Betriebsweise des ersten Druckwechseladsorbers wird das in der kryogenen Gaszerlegung erhaltene HD-Flashgas vorzugsweise zur Erhöhung der Wasserstoffausbeute vor den ersten Druckwechseladsorber in das zu zerlegende Synthesegas zurückgeführt. Sinnvollerweise wird die erste PSA-Niederdruckfraktion soweit verdichtet, dass die Zurückführung des HD-Flashgases aus der kryogenen Gaszerlegung ohne weitere Verdichtung erfolgen kann.

Eine Weiterbildung des erfindungsgemäßen Verfahrens sieht vor, die im zweiten Druckwechseladsorber mit den Restkomponenten des HD-Flashgases angereicherte zweite PSA-Niederdruckfraktion zurückzuführen und in einer bei der Reformierung des kohlenwasserstoffhaltigen Einsatzes verwendeten Heizeinrichtung zu unterfeuern. Zweckmäßigerweise wird die zweite PSA-Niederdruckfraktion vor ihrer Unterfeuerung gegen abzukühlendes Synthesegas angewärmt.

Falls die Menge der zweiten PSA-Niederdruckfraktion nicht zum Betrieb der Heizeinrichtung ausreicht, kann sie mit einem Teil der ersten PSA-Hochdruckfraktion ergänzt werden. Vorzugsweise wird dieser Teil der PSA-Hochdruckfraktion hierzu über eine Membran in ein wasserstoffreiches Permeat, das mit der zweiten PSA-Niederdruckfraktion vereinigt wird, und ein kohlenmonoxid- und methanreiches Retentat getrennt, das zusammen mit dem kohlenstoffhaltigen Einsatz der Reformierung zugeführt wird.

Ist die Menge der zweiten PSA-Niederdruckfraktion zu groß, um vollständig in der Heizeinrichtung unterfeuert zu werden, kann der überschüssige Teil vor den zweiten Druckwechseladsorber zurückgeführt werden, um die Wasserstoffausbeute zu erhöhen. Möglich ist es auch, den überschüssigen Teil der zweiten PSA-Niederdruckfraktion zusammen mit dem kohlenstoffhaltigen Einsatz der Reformierung zuzuführen.

Mit besonderem Vorzug kann diese Art der Synthesegasbehandlung eingesetzt werden, wenn der kohlenstoffhaltige Einsatz, bei dem es sich beispielsweise um Erdgas handelt, mit Hilfe eines Pre- und eines Autothermal-Reformers (ATR) reformiert wird, wobei der Pre-Reformer vor dem ATR angeordnet ist, um diesen mit geringerem Dampf/Kohlenstoff-Verhältnis betreiben zu können.

Eine andere bevorzugte Ausgestaltung des erfindungsgemäßen Verfahrens sieht vor, den ersten Druckwechseladsorber so zu betreiben, dass die erste PSA-Hochdruckfraktion mit einer Zusammensetzung erhalten wird, die ihre Abgabe als Wasserstoffprodukt erlaubt. Um den Kohlendioxid-Partialdruck in der PSA-Niederdruckfraktion zu maximieren, wird der erste Druckwechseladsorber zweckmäßigerweise außerdem so ausgelegt und betrieben, dass mindestens 90% des im Synthesegas enthaltenen Wasserstoffs in die PSA-Hochdruckfraktion übergehen.

Bei dieser Verfahrensweise wird das bei der kryogegen Gaszerlegung erhaltene HD-Flashgas einem zweiten Druckwechseladsorber zugeführt, der so betrieben wird, dass mindestens 95%, bevorzugt mehr als 99% des im HD-Flashgas enthaltenen Kohlendioxids in die zweite PSA-Niederdruckfraktion übergehen und gleichzeitig mindestens 92%, bevorzugt mehr als 95% des im HD-Flashgas enthaltenen Wasserstoffs in die zweite PSA-Hochdruckfraktion gelangen.

Neben Wasserstoff und Kohlendioxid kann das HD-Flashgas auch Methan, Kohlenmonoxid oder Stickstoff enthalten. Zweckmäßigerweise wird der zweite Druckwechseladsorber so ausgelegt und betrieben, dass wenigstens 50%, bevorzugt mehr als 65% des Methans, wenigstens 70% %, bevorzugt mehr als 80% des Kohlenmonoxids und wenigsten 80%, bevorzugt mehr als 85% des Stickstoffs in die zweite PSA-Hochdruckfraktion übergehen.

Die kohlendioxidreiche zweite PSA-Niederdruckfraktion wird vorzugsweise mit der zu verdichtenden ersten PSA-Niederdruckfraktion vereinigt und mit dieser der kryogenen Gaszerlegung zugeführt. Vorzugsweise wird die wasserstoffreiche zweite PSA-Hochdruckfraktion über eine Membran in ein wasserstoffreiches Permeat, das zurückgeführt und in einer bei der Reformierung des kohlenwasserstoffhaltigen Einsatzes verwendeten Heizeinrichtung unterfeuert wird, und ein kohlenmonoxid- und methanreiches Retentat getrennt, das zusammen mit dem kohlenstoffhaltigen Einsatz der Reformierung zugeführt wird. Zweckmäßigerweise wird das wasserstoffreiche Permeat vor seiner Unterfeuerung gegen abzukühlendes Synthesegas angewärmt, während die zweite PSA-Hochdruckfraktion sinnvollerweise stromaufwärts der Membran als Regeneriergas in einem Temperaturwechseladsorber verwendet wird, der dazu dient, Wasserreste und ggf. Methanol aus der verdichteten ersten PSA-Niederdruckfraktion abzutrennen.

Diese Art der Synthesegasbehandlung kann dann mit besonderem Vorzug eingesetzt werden, wenn der kohlenstoffhaltige Einsatz, bei dem es sich beispielsweise um Erdgas handelt, mit Hilfe einer Kombination aus einem brennerbefeuerten Dampfreformer (SMR), einem dem SMR vorgeschalteten Pre-Reformer sowie einem Gas-Heated-Reformer (GHR) reformiert wird, wobei der GHR, der sich entweder im Seitenstrom parallel zum SMR befindet oder dem SMR vorgeschaltet ist, über das heiß aus dem SMR austretende Syntheserohgas beheizt wird. Durch den GHR, der mindestens 10-30% der Reformierungsreaktion übernimmt, kann die für den Betrieb von Pre-Reformer und SMR benötigte Feuerungsleistung minimiert werden.

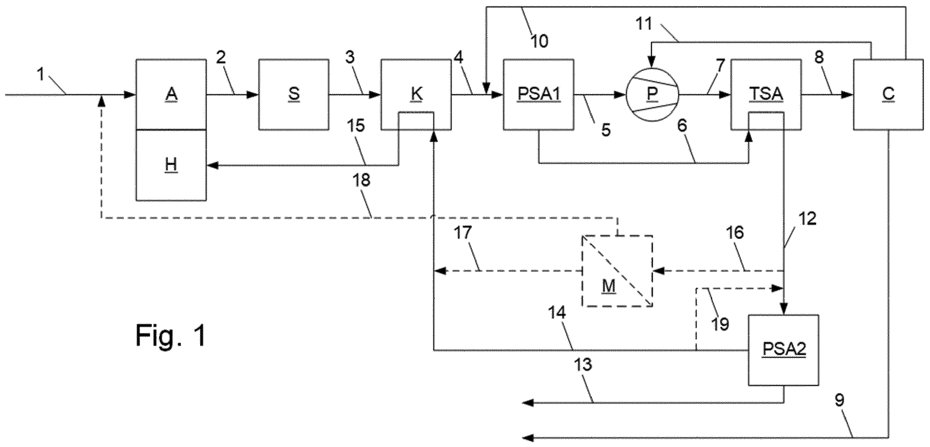

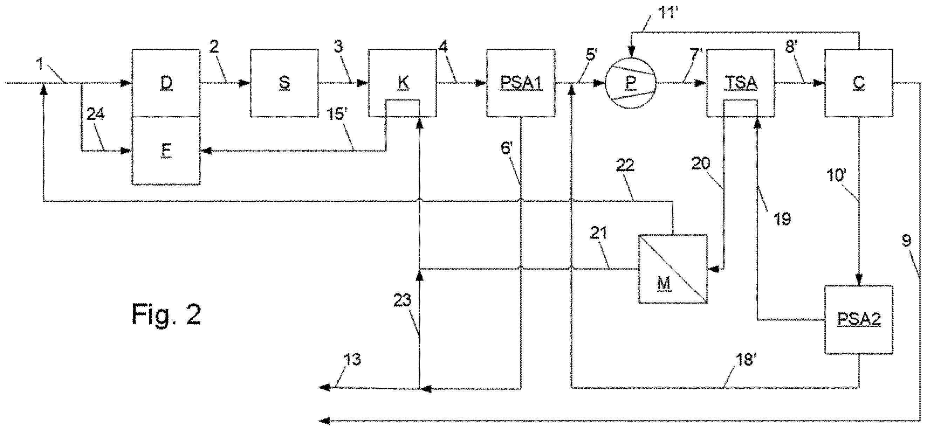

Im Folgenden soll die Erfindung anhand zweier in den Figuren 1 und 2 schematisch dargestellter Ausführungsbeispiele näher erläutert werden.

Die Figur 1 zeigt eine Wasserstofferzeugung unter Verwendung eines Autothermalreformers gemäß einer bevorzugten Ausgestaltung des erfindungsgemäßen Verfahrens.

Die Figur 2 zeigt eine Wasserstofferzeugung unter Verwendung eines brennerbefeuerten Dampfreformers gemäß einer anderen bevorzugten Ausgestaltung des erfindungsgemäßen Verfahrens.

In beiden Figuren werden gleich Komponenten mit den gleichen Symbolen gekennzeichnet.

Im Ausführungsbeispiel der Figur 1 wird der mit einem Pre- und einem Autothermal-Reformer (ATR) ausgeführten Reformierungseinrichtung A ein kohlenwasserstoffhaltiger Einsatz 1 wie beispielsweise Erdgas zugeführt, um zu einem Wasserstoff, Stickstoff, Kohlenmonoxid, Kohlendioxid sowie Wasser und Methan enthaltenden Syntheserohgas 2 umgesetzt zu werden. Der Pre-Reformer ist vor dem ATR angeordnet und ermöglicht es, diesen mit geringerem Dampf/Kohlenstoff-Verhältnis zu betreiben. In der nachfolgenden Wassergas-Shift S, die vorzugsweise als Kombination aus Hoch- und Nieder- oder Mittel- und Niedertemperatur-Shift ausgeführt ist, wird Kohlenmonoxid mit Wasser zu Wasserstoff und Kohlendioxid umgesetzt, so dass ein weitgehend kohlenmonoxidfreies Synthesegas 3 erhalten wird, das nach der Auskondensierung von Wasser in der Kühleinrichtung K über Leitung 4 dem ersten Druckwechseladsorber PSA1 zugeführt wird. Der erste Druckwechseladsorber PSA1 wird so ausgelegt und betrieben, dass wenigstens 95%, vorzugsweise wenigstens 99% des im abgekühlten und entwässerten Synthesegas 4 vorliegenden Kohlendioxids in die erste PSA-Niederdruckfraktion 5 übergehen, die einen leichten Überdruck aufweist. Gleichzeitig verbleiben wenigstens 92%, bevorzugt aber mehr als 95% des im Synthesegas 4 enthaltenen Wasserstoffs zusammen mit mindestens 50%, bevorzugt mehr als 65% des Methans, mindestens 70%, bevorzugt mehr als 80% des Kohlenmonoxids und mindestens 80%, bevorzugt mehr als 85% des Stickstoffs in der ersten PSA-Hochdruckfraktion 6.

Nach einer Druckerhöhung mittels des mehrstufigen Verdichters P wird die erste PSA-Niederdruckfraktion 5 zur Abtrennung von Wasser und evtl. vorhandenem Methanol über Leitung 7 in den Temperaturwechseladsorber TSA eingeleitet, aus der sie über Leitung 8 der Tieftemperaturzerlegung C zugeführt wird, um in einem Kondensationsprozess in eine Kohlendioxidfraktion 9, ein wasserstoffreiches, Stickstoff, Kohlendioxid, Kohlenmonoxid und Methan enthaltendes Hochdruck-Flashgas 10 sowie ein kohlendioxidreiches, Wasserstoff, Stickstoff, Kohlenmonoxid und Methan enthaltendes Mitteldruck-Flashgas 11 zerlegt zu werden. Während die Kohlendioxidfraktion aufgrund ihrer Zusammensetzung als Produkt abgegeben oder durch Sequestrierung entsorgt werden kann, werden die beiden Flashgase 10, 11 zur Erhöhung der Ausbeute vor den ersten Druckwechseladsorber bzw. als Zwischeneinspeisung in den Verdichter P zurückgeführt.

Die erste PSA-Hochdruckfraktion 6 wird im Temperaturwechseladsorber TSA als Regeneriergas eingesetzt, bevor sie über Leitung 12 einem zweiten Druckwechseladsorber PSA2 zugeführt wird, der so ausgelegt und betrieben wird, dass eine zweite PSA-Hochdruckfraktion 13 mit einer Zusammensetzung erhalten wird, die ihre Abgabe als Wasserstoffprodukt erlaubt. Die zweite PSA-Niederdruckfraktion 14 wird in der Kühleinrichtung K gegen das weitgehend kohlenmonoxidfreie Synthesegas 3 angewärmt und über Leitung 15 der zur Erzeugung von Prozessdampf und der Einsatzstoffvorwärmung dienenden Heizeinrichtung H zur Unterfeuerung zugeführt.

Falls die zweite PSA-Niederdruckfraktion 14 nicht zum Betrieb der Heizeinrichtung H ausreicht, kann ihr eine Teil 16 des wasserstoffreichen, Stickstoff, Kohlenmonoxid und Methan enthaltenden und kohlendioxidarmen Gasstroms 12 zugemischt werden. Ein Variante sieht vor den Stoffstrom 16 über eine Membran M zu leiten, um ein wasserstoffreiches Permeat 17, das mit der zweiten PSA-Niederdruckfraktion 14 vereinigt wird, und ein kohlenmonoxid- und methanreiches Retentat 18 zu erhalten, das nach Verdichtung (nicht dargestellt) zur Erhöhung der Carbon Capture Rate dem Einsatz 1 für die Reformierungseinrichtung A zugemischt wird.

Ist die Menge der zweiten PSA-Niederdruckfraktion 14 zu groß, um vollständig in der Heizeinrichtung H unterfeuert zu werden, kann ein Teil 19 verdichtet (nicht dargestellt) und vor den zweiten Druckwechseladsorber PSA2 zurückgeführt werden, um die Wasserstoffausbeute zu erhöhen. Möglich ist es auch, den überschüssigen Teil der zweiten PSA-Niederdruckfraktion 14 vor die Reformierungseinrichtung A zurückzuführen.

Im Ausführungsbeispiel der Figur 2 umfasst die Reformierungseinrichtung D einen brennerbefeuerten Dampfreformer (SMR) mit einem stromaufwärts angeordneten Pre-Reformer sowie einen Gas-Heated-Reformer (GHR), der sich entweder im Seitenstrom parallel zum SMR befindet oder dem SMR vorgeschaltet ist. Mit dem über das heiß aus dem SMR austretende Syntheserohgas beheizten GHR, der dazu dient, die für den Betrieb von Pre-Reformer und SMR benötigte Feuerungsleistung zu minimieren, übernimmt er mindestens 10-30% der in der Reformierungseinrichtung D ablaufenden Reformierungsreaktion.

Anders als in dem Ausführungsbeispiel der Figur 1 wird der erste Druckwechseladsorber PSA1 so ausgelegt und betrieben, dass die erste PSA-Hochdruckfraktion 6' mit Qualität erhalten wird, die ihre Abgabe als Wasserstoffprodukt erlaubt. Gleichzeitig werden mindestens 90% des im entwässerten Synthesegas 4 vorliegenden Wasserstoffs in die erste PSA-Hochdruckfraktion 6' überführt, um einen hohen Kohlendioxid-Partialdruck in der PSA-Niederdruckfraktion 5' zu erreichen.

Nach Druckerhöhung im mehrstufigen Verdichter P wird die verdichtete PSA-Niederdruckfraktion 7' in den Temperaturwechseladsorber TSA eingeleitet, aus der ein getrockneter und ggf. von Methanol befreiter Stoffstrom 8' in die Tieftemperaturzerlegung C überführt wird, um in einem Kondensationsprozess in eine Kohlendioxidfraktion 9, ein wasserstoffreiches, Stickstoff, Kohlendioxid, Kohlenmonoxid und Methan enthaltendes Hochdruck-Flashgas 10' sowie ein kohlendioxidreiches, Wasserstoff, Stickstoff, Kohlenmonoxid und Methan enthaltendes Mitteldruck-Flashgas 11' zerlegt zu werden. Während die Kohlendioxidfraktion 9 aufgrund ihrer Zusammensetzung als Produkt abgegeben oder durch Sequestrierung entsorgt werden kann, wird das Mitteldruck-Flashgas 11' als Zwischeneinspeisung in den Verdichter P zurückgeführt und das Hochdruck-Flashgas 10' in den zweiten Druckwechseladsorber PSA2 eingeleitet.

Aufgabe des zweiten Druckwechseladsorbers PSA2 ist es, das im Hochdruck-Flashgas 10' enthaltene Kohlendioxid so weit wie möglich abzutrennen, um es über den mehrstufigen Verdichter P und die Tieftemperaturzerlegung C in die Kohlendioxidfraktion 9 zu überführen. Der zweite Druckwechseladsorber PSA2 wird so ausgelegt und betrieben, dass wenigstens 95%, vorzugsweise wenigstens 99% des im Hochdruck-Flashgas 10' vorliegenden Kohlendioxids in die zweite PSA-Niederdruckfraktion 18' übergehen, die einen leichten Überdruck aufweist und zur Saugseite des mehrstufigen Verdichters P zurückgeführt wird. Gleichzeitig verbleiben wenigstens 92%, bevorzugt aber mehr als 95% des im Hochdruck-Flashgas 10'enthaltenen Wasserstoffs zusammen mit mindestens 50%, bevorzugt mehr als 65% des Methans, mindestens 70%, bevorzugt mehr als 80% des Kohlenmonoxids und mindestens 80%, bevorzugt mehr als 85% des Stickstoffs in der zweiten PSA-Hochdruckfraktion 19.

Die wasserstoffreiche zweite PSA-Hochdruckfraktion 19 wird vorzugsweise als Regeneriergas im Temperaturwechseladsorber TSA eingesetzt und anschließend über Leitung 20 für eine weitere stoffliche Trennung in die Membraneinheit M eingeleitet, wo ein wasserstoffreiches Permeat 21 und ein kohlenmonoxid- und methanreiches, Wasserstoff enthaltendes Retentat 22 entstehen. Das Retentat 22 wird in die Reformierungseinrichtung D zurückgeführt und aufgrund seines Kohlenmonoxidanteils dem Pre-Reformer aufgegeben, während das Permeat 21 nach Mischung mit einem Produktqualität aufweisenden Stoffstrom 23 in der Kühleirichtung K angewärmt und als Brennstoffstrom 15' im Feuerraum F des Dampfreformers D verbrannt wird. Der Stoffstrom 23 ist ein Teil der ersten PSA-Hochdruckfraktion 6', deren Rest das Wasserstoffprodukt 13 bildet. Die Größe des Stoffstroms 23 wird so gewählt, dass kein oder nur sehr wenig kohlenwasserstoffhaltiges Brenngas 24 hinzugefügt werden muss, um den Heizbedarf des Dampfreformers zu decken.

## Patentansprüche

1. Verfahren zur Erzeugung eines Wasserstoffprodukts, bei dem ein kohlenstoffhaltiger Einsatz (1) durch Reformierung (A, D) und Wassergas-Shift (S) zu einem weitgehend aus Wasserstoff und Kohlendioxid bestehenden Synthesegas (4) umgesetzt wird, aus dem eine Wasserstofffraktion (13, 6') sowie eine Kohlendioxidfraktion (9) abgetrennt werden, wobei die Wasserstofffraktion (13, 6') die für das Wasserstoffprodukt (13) geforderte Zusammensetzung besitzt und die Kohlendioxidfraktion (9) eine Reinheit aufweist, die ihre Abgabe als Produkt oder ihre Entsorgung durch Sequestrierung erlaubt, **dadurch gekennzeichnet, dass** das weitgehend aus Wasserstoff und Kohlendioxid bestehende Synthesegas mittels eines ersten Druckwechseladsorbers (PSA1) in eine an Kohlendioxid abgereicherte erste PSA-Hochdruckfraktion (6, 6') sowie eine mit Kohlendioxid angereicherte, erste PSA-Niederdruckfraktion (5, 5') zerlegt wird, aus der nach Verdichtung (P) die Kohlendioxidfraktion (9) durch kryogene Gaszerlegung (C) erhalten wird.

2. Verfahren nach Anspruch 1, **dadurch gekennzeichnet, dass** die kryogene Gaszerlegung (C) zwei Trennschritte umfasst, durch die ein erstes (10) und ein zweites Wasserstoff und Kohlendioxid aufweisendes Flashgas (11) entstehen, wobei das erste Flashgas (10) (HD-Flashgas) einen höheren Druck als das zweite Flashgas (11) (MD-Flashgas) besitzt.

3. Verfahren nach einem der Ansprüche 1 oder 2, **dadurch gekennzeichnet, dass** die Kohlendioxidfraktion (9) flüssig aus der kryogenen Gaszerlegung (C) abgezogen wird.

4. Verfahren nach einem der Ansprüche 1 bis 3, **dadurch gekennzeichnet, dass** für die kryogene Gaszerlegung (C) benötigte Kälte über einen Ammoniak-Kältekreislauf oder einen Propylen-Kältekreislauf oder einen Gemisch-Kältekreislauf bereitgestellt wird.

5. Verfahren nach einem der Ansprüche 1 bis 4, **dadurch gekennzeichnet, dass** der erste Druckwechseladsorber (PSA1) so ausgelegt und betrieben wird, dass mehr als 95%, bevorzugt mehr als 99% des im Synthesegas (4) vorliegenden Kohlendioxids in die erste PSA-Niederdruckfraktion (5) übergehen.

6. Verfahren nach Anspruch 5, **dadurch gekennzeichnet, dass** das Synthesegas (4) Methan und/oder Kohlendioxid und/oder Stickstoff enthält und der erste Druckwechseladsorber (PSA1) so ausgelegt und betrieben wird, dass mindestens 50%, bevorzugt mehr als 65% des Methans, mindestens 70%, bevorzugt mehr als 80% des Kohlenmonoxids und mindestens 80%, bevorzugt mehr als 85% des Stickstoffs in die erste PSA-Hochdruckfraktion (6) übergehen.

7. Verfahren nach einem der Ansprüche 5 oder 6, **dadurch gekennzeichnet, dass** die erste PSA-Hochdruckfraktion (6) einem zweiten Druckwechseladsorber (PSA2) zugeführt wird, um in eine an Kohlendioxid abgereicherte, für das Wasserstoffprodukt geforderte Zusammensetzung aufweisende zweite PSA-Hochdruckfraktion (13) sowie eine zweite PSA-Niederdruckfraktion (14) zerlegt zu werden.

8. Verfahren nach Anspruch 7, dadurch das zumindest ein Teil der zweiten PSA-Niederdruckfraktion (14) bei der der Reformierung (A) als Heizgas eingesetzt wird.

9. Verfahren nach einem der Ansprüche 5 bis 7, **dadurch gekennzeichnet, dass** die erste PSA-Niederdruckfraktion (5) soweit verdichtet wird, dass das HD-Flashgas (10) aus der kryogenen Gaszerlegung (C) ohne weitere Verdichtung vor den ersten Druckwechseladsorber (PSA1) zurückgeführt werden kann.

10. Verfahren nach einem der Ansprüche 1 bis 4, **dadurch gekennzeichnet, dass** der erste Druckwechseladsorber (PSA1) so ausgelegt und betreiben wird, dass die erste PSA-Hochdruckfraktion (6') die für das Wasserstoffprodukt geforderte Zusammensetzung aufweist, wobei wenigstens 90% des im Synthesegas (4) vorliegenden Wasserstoffs in die PSA-Hochdruckfraktion (6') übergehen.

11. Verfahren nach Anspruch 10, **dadurch gekennzeichnet, dass** das bei der kryogenen Gaszerlegung (C) erhaltene wasserstoffreiche, Kohlendioxid enthaltende HD-Flashgas (10') einem zweiten Druckwechseladsorber (PSA2) zugeführt wird, um in eine an Kohlendioxid abgereicherte zweite PSA-Hochdruckfraktion (19) sowie eine mit Kohlendioxid angereicherte zweite PSA-Niederdruckfraktion (18') zerlegt zu werden, wobei der zweite Druckwechseladsorber (PSA2) so ausgelegt und betrieben wird, dass wenigstens 95%, vorzugsweise wenigstens 99% des im HD-Flashgas (10') vorliegenden Kohlendioxids in die zweite PSA-Niederdruckfraktion (18') übergehen und gleichzeitig wenigstens 92%, bevorzugt aber mehr als 95% des im Hochdruck-Flashgas (10') enthaltenen Wasserstoffs in der zweiten PSA-Hochdruckfraktion (19) verbleiben .

12. Verfahren nach Anspruch 11, **dadurch gekennzeichnet, dass** das HD-Flashgas (10') Methan und/oder Kohlendioxid und/oder Stickstoff enthält und der zweite Druckwechseladsorber (PSA2) so ausgelegt und betrieben wird, dass mindestens 50%, bevorzugt mehr als 65% des Methans, mindestens 70%, bevorzugt mehr als 80% des Kohlenmonoxids und mindestens 80%, bevorzugt mehr als 85% des Stickstoffs in die zweite PSA-Hochdruckfraktion (19) übergehen.

13. Verfahren nach einem der Ansprüche 11 oder 12, **dadurch gekennzeichnet, dass** die zweite PSA-Niederdruckfraktion (18') vor die Verdichtung P zurückgeführt wird.

14. Verfahren nach Anspruch 13, **dadurch gekennzeichnet, dass** die zweite PSA-Niederdruckfraktion (20) über eine Membran (M) in ein wasserstoffreiches Permeat (21) und ein kohlenmonoxid- und methanreiches Retentat (22) zerlegt wird, von denen das Permeat (21) bei der der Reformierung (D) als Heizgas eingesetzt und das Retentat (22) vor die Reformierungseinrichtung (D) zurückgeführt wird.

15. Verfahren nach Anspruch 13, **dadurch gekennzeichnet, dass** zumindest ein Teil (23) der ersten PSA-Hochdruckfraktion (6') bei der der Reformierung (D) als Heizgas eingesetzt wird.
